# EUROPEAN PATENT APPLICATION

(11) **EP 2 618 264 A1**
(43) Date of publication of application: **24.07.2013**
(21) Application number: 11824523.2
(22) Date of filing: 21.07.2011
(51) Int. Cl.: G06F 12/14

(54) **METHOD FOR CLEARING COMPUTER DATA AND COMPUTER**

(30) Priority: 14.09.2010 CN 201010280524
(71) Applicant: Runcore High-Tech Co., Ltd., Hunan 410205 (CN)
(72) Inventor: YU, Hongqi, Hunan 410205 (CN); XU, Xin, Hunan 410205 (CN); WU, Jia, Hunan 410205 (CN)
(74) Representative: Modiano, Micaela Nadia
(86) International application number: PCT/CN2011/077450
(87) International publication number: WO 2012/034453

(57) **Abstract**

The disclosure provides a method for clearing computer data and a computer. The method comprises: a computer receiving a command for clearing data through a wireless network, or sensing that the computer is disassembled and then generating the command for clearing data; and the computer clearing data in the memory of the computer. The computer comprises a memory, a wireless module, and further comprises a control chip, a sensor, and a power supply. The control chip is connected to the memory, the wireless module, the sensor, and the power supply respectively, obtains, through the wireless module or the sensor, a command for clearing data, and executes the command to clear the data in the memory. In the disclosure, the computer is powered on and started only upon obtaining a starting authorization of a user, so as to improve confidentiality of computer data; and further, the data can be cleared or be not cleared according to whether it is successful to match a password, or the data can be cleared after obtaining a command of a user if it is not successful to match the password. Therefore, the confidentiality of user data is improved, and the user data is kept confidential and is prevented from being leaked.

## Description

### Technical field of the invention

The disclosure relates to the field of computer technologies, and more particularly to a method for clearing computer data and a computer.

### Background of the invention

With the increasing importance of computers' role in our daily life, people are becoming more and more computer-dependent. Due to the convenient and efficient use of computers, many important data are stored in computers.

When data are stored in the computer, the hidden troubles of the security may occur. Generally, there are two kinds of hidden troubles of data security: the memory errors and the illegal reading.

Memory errors can be prevented by using top-quality hard disks as accessories, utilizing drop-resistant shockproof protective devices, and so on.

Most computer users, no matter individuals or enterprises, lack data safety awareness and do not have data protection with regard to illegal reading. So if laptops which preserve the relevant material of company are stolen, it takes a great deal of efforts for relevant authorities to make up.

Passwords can be set on computers to prevent illegal reading. However, all kinds of passwords can be deciphered over time. Therefore, even if passwords are set on a computer, data will still be read and become non-confidential after the computer is stolen and the passwords are deciphered because the passwords are unique and the data cannot be cleared in time.

### Summary of the invention

The disclosure aims to provide a method for clearing computer data and a computer to solve the problem that data will still be read after the computer is stolen because the data cannot be cleared in time.

According to an aspect of the disclosure, a method for clearing computer data is provided, comprising: a computer receiving a command for clearing data through a wireless network, or sensing that the computer is disassembled and then generating the command for clearing data; the computer clearing data in a memory of the computer.

Preferably, before the computer receives the command for clearing data through the wireless network, the method further comprises: the computer outputting a prompt of matching a password, and determining whether a received password is matched correctly; logging in a system if the received password is matched correctly; if the received password is not matched correctly, sending a request for clearing data through the wireless network to a user terminal; the user terminal sending the command for clearing data to the computer after acknowledging the request for clearing data.

Preferably, before the computer outputs the prompt of matching a password, the method further comprises: the computer receiving a power-on signal and sending a request of whether to perform power-on through the wireless network; the computer determining whether a power-on command is received within a predetermined time period, and executing the power-on command and starting the computer if the computer receives the power-on command within the predetermined time period; turning off a power supply if the computer fails to receive the power-on command within the predetermined time period.

Preferably, the memory is a solid state disk or a mechanical hard disk.

Preferably, the computer receives the command for clearing data through a short message or a mail.

According to another aspect of the disclosure, a computer is provided, comprising: a memory, a wireless module, a control chip, a sensor and a power supply, wherein the control chip is connected to the memory, the wireless module, the sensor, and the power supply respectively, and responds to a command for clearing data from the wireless module or the sensor to clear data in the memory; the wireless module is configured to receive the command for clearing data from a wireless network; the sensor is configured to sense that the computer is disassembled and then generate the command for clearing data; the memory, the wireless module, the control chip, the sensor and the power supply are packaged in the computer.

Preferably, the memory is a solid state disk or a mechanical hard disk.

Preferably, the wireless module is a communication module which applies Global System for Mobile Communications (GSM), Code Division Multiple Access (CDMA), Wireless Fidelity (WiFi) or 3rd Generation (3G) communication technology.

Preferably, the control chip further comprises: a password matching module configured to, before the wireless module receives the command for clearing data, control the computer to output a prompt of matching a password, and according to the result of matching the password, control the computer to log in a system or control the wireless module to send a request for clearing data to a user terminal, wherein the user terminal, after acknowledging the request for clear data, sends the command for clearing data to the computer.

Preferably, the control chip further comprises: a power supply control module configured to, after the computer receives a power-on signal and before the password matching module outputs the prompt for matching a password, send a request of whether to perform power-on through the wireless module; and choose to execute the power-on command or turn off the power supply within a predetermined time period according to a received power-on command.

Preferably, the computer is a desktop computer or a laptop.

In the embodiments above, the computer is powered on and started only upon obtaining a starting authorization of a user, so as to improve the confidentiality of computer data; Besides, the data can be cleared or be not cleared according to whether it is successful to match a password, or the data can be cleared after obtaining a user command when mismatching the password. Therefore, the confidentiality of user data is improved, and the user data is kept confidential and is prevented from being leaked.

### Brief description of the drawings

The accompanying drawings are used for promoting the understanding of the disclosure which constitutes a part of the present, application. The exemplary embodiments of the disclosure and the illustrations thereof are used for explaining the disclosure, and do not make any improper limitation to the disclosure. In the accompanying drawings:
Fig. 1 illustrates a diagram illustrating an internal structure of a computer in the first embodiment;
Fig. 2 illustrates a flowchart of an access control method of a computer memory of the second embodiment;
Fig. 3 illustrates a flowchart of an access control method of a computer memory of the third embodiment;
Fig. 4 illustrates a flowchart of an access control method of a computer memory of the fourth embodiment;
Fig. 5 illustrates a flowchart of an access control method of a computer memory of the fifth embodiment; and
Fig. 6 illustrates a structural diagram of a laptop in the sixth embodiment.

### Detailed description of the embodiments

The disclosure will be described in details below with reference to the accompanying drawings and in combination with the embodiments. The proposals in the embodiments of the disclosure can clear data in a laptop computer in time.

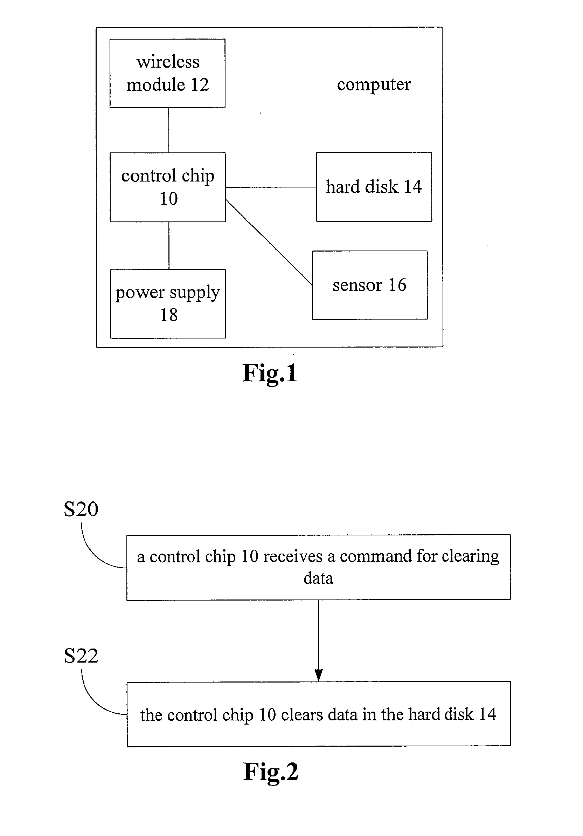

As shown in Fig. 1 which is a structural diagram of a computer in the first embodiment of the disclosure. The computer comprises: a control chip 10, a wireless module 12, a hard disk 14, a sensor 16 and a power supply 18.

The control chip 10 can be integrated on the main board of the computer and connected to the wireless module 12, the hard disk 14, the sensor 16 and the power supply 18 via corresponding data wires. The wireless module 12 can apply communication technologies including GSM, CDMA, WiFi or 3G etc. The hard disk 14 can apply an SSD (Solid State Disk) or a mechanical hard disk etc. The power supply 18 can also apply a storage battery. These components are packaged in the computer. If the computer is disassembled without authorization, the sensor 16 will send a trigger signal for clearing data to the control chip 10.

A data clearing process performed based on the computer in the first embodiment will be described in details below through the second embodiment. As shown in Fig. 1 and Fig. 2, the process comprises the following steps:
Step 20: the control chip 10 receives a command for clearing data.

The control chip 10 receives a command of the wireless module 12 or a command of the sensor 16 and identifies the command as a command for clearing data.

Step 22: the control chip 10 clears the data in the hard disk 14.

After receiving the command, the control chip 10 clears the data in the hard disk 14.

Through the proposal above, after a user loses a computer, the computer is able to clear data therein after obtaining a command for clearing data, so as to keep user data confidential and prevent the user data from being leaked.

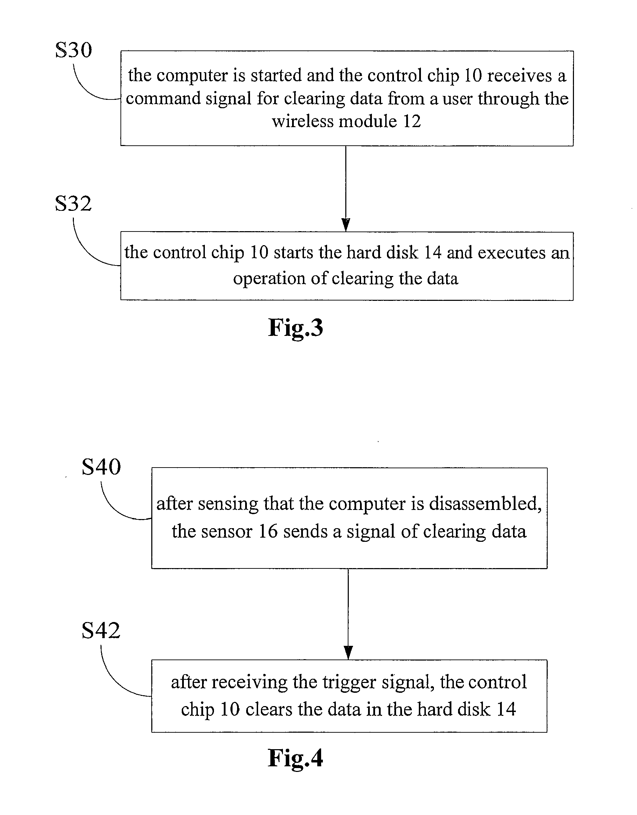

Two situations of clearing data in the first embodiment will be explained below through the third embodiment and the fourth embodiment. The third embodiment will be explained first, comprising the following steps as shown in Fig. 1 and Fig. 3:
Step 30: the computer is started and the control chip 10 receives a command signal for clearing data from a user through the wireless module 12.

The user can send the command for clearing data via a network terminal, such as a cell phone and a computer connected to the Internet etc. After the computer is started, the wireless module 12 will receive a message from a network, such as a short message, a packet data command or a mail etc., so as to obtain the command for clearing data from the user.

Step 32: the control chip 10 starts the hard disk 14 and executes an operation of clearing the data.

In above process of clearing the data, the user can send a command for clearing data through a network terminal such as a cell phone and a computer connected to the Internet etc., after the computer is lost. After the computer is started, the wireless module 12 will receive a message from a network, such as a short message, a packet data command or a mail etc., so as to obtain the command for clearing data from the user and clear the data in the hard disk 14, so as to keep user data confidential and prevent the user data from being leaked.

After the computer is lost, the theft will disassemble the computer. In order to prevent automatic data consumption, the theft will disassemble the computer to obtain the data therein. In order to prevent data in the computer from being leaked, the data is cleared according to the proposal in the fourth embodiment, wherein the proposal comprises the following steps as shown in Fig. 1 and Fig. 4:
Step 40: after sensing that the computer is disassembled, the sensor 16 sends a signal for clearing data to a user terminal; after acknowledging the request for clearing data, the user terminal sends the command for clearing data to the computer.

The user terminal in the present step can be a cell phone terminal. After receiving the request for clearing data, the cell phone terminal of the user can send a command for clearing data to the computer. Here, the request for clearing data can be received through a short message.

The control chip 10, the wireless module 12, the hard disk 14, the sensor 16 and the power supply 18 are packaged in the computer. After sensing that the computer is disassembled, the sensor 16 sends a trigger signal for clearing data to the control chip 10.

Step 42: after receiving the trigger signal, the control chip 10 clears the data in the hard disk 14.

Through the proposal in the fourth embodiment, the control chip 10 can obtain the command for clearing data and clears the data in the hard disk 14 so as to keep user data confidential and prevent the user data from being leaked.

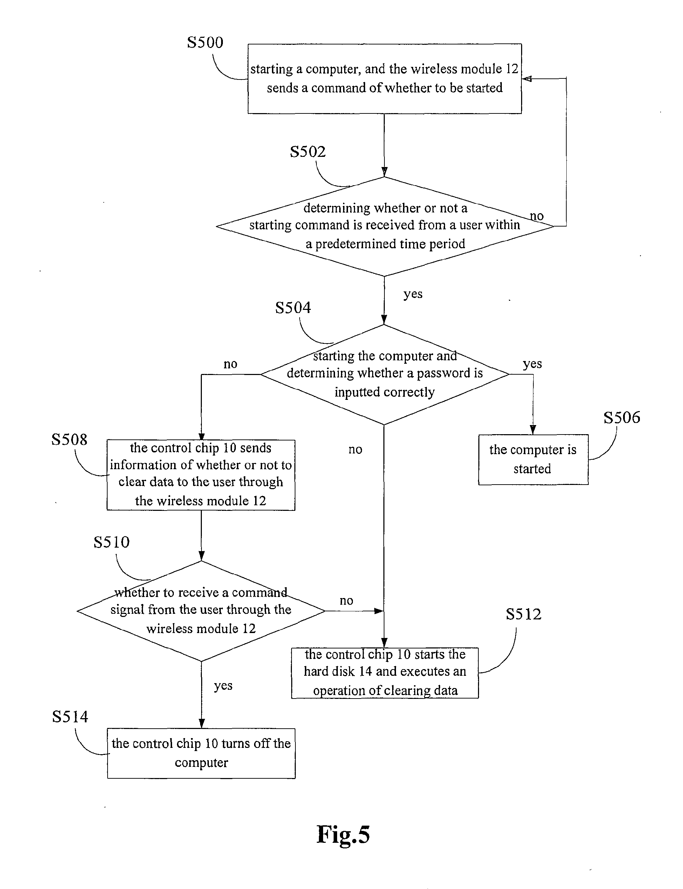

In the embodiment above, a starting authorization of a user can be further obtained after the computer is started, which improves confidentiality of computer data. Further, the data can be cleared or be not cleared according to whether it is successful to match a password or, the data is cleared by applying the proposal in the third embodiment if it is unsuccessful to match the password, which will be described below through the fifth embodiment, comprising the following steps as shown in Fig. 5:
Step 500: starting a computer and the wireless module 12 sends a command of whether to be started.

The wireless module 12 can send a message, such as a short message, a packet data command or a mail etc., to the network to remind the user whether to start the computer or not.

Step 502: the wireless module 12 determines whether a starting command of the user is received within a predetermined time period; if yes, performing Step 504 and starting the computer; otherwise, waiting for the next triggering and returning to Step 500;

Step 504: starting the computer and determining whether a password inputted is correctly; if yes, performing Step 506 and the computer is started; otherwise, performing Step 508 or Step 512;

Step 508: the control chip 10 sends information of clearing data to the user through the wireless module 12;

The wireless module 12 can send the information of clearing data to the user through a short message, a packet data command or a mail etc.

After receiving the information, the user can return a command indicating whether to clear data or not through a network terminal, such as a cell phone and a computer connected to the Internet etc.

Step 510: the control chip 10 determines whether or not to receive a command signal from the user through the wireless module 12 within a predetermined time period; if the command signal is received, performing Step 512; otherwise, performing Step 514.

After Step 508, the wireless module 12 will receive a message from the network, such as a short message, a packet data command or a mail etc., so as to obtain whether the user has sent the command for clearing data.

Step 512: the control chip 10 starts the hard disk 14 and executes an operation of clearing data.

Preferably, when other user authorized by a user uses the computer, wrong passwords may be inputted and the user can also choose to return a command, such as logging in the system forcibly, to remotely assist other users to use the computer.

Step 514: the control chip 10 turns off the computer.

In the embodiment above, the computer is powered on and started only after obtaining a starting authorization of a user, so as to improve confidentiality of computer data; and further, the data can be cleared or be not cleared according to whether it is successful to match a password, or the data can be cleared after obtaining a user command if it is unsuccessful to match the password. Therefore, the confidentiality of user data is improved, and the user data is kept confidential and is prevented from being leaked.

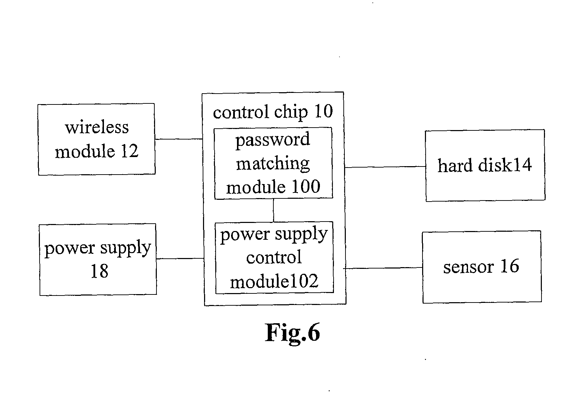

Each embodiment of the method of the disclosure has been described in details above. The method of the embodiment can be integrated in each component in the first embodiment, for example. These components can be installed in a small server, a desktop computer or a mobile laptop. A structure of a laptop will be described in details below through the sixth embodiment. As shown in Fig. 6, the structure comprises: a hard disk 14, a wireless module 12, a control chip 10, a sensor 16 and a power supply 18.

The control chip 10 is connected to the hard disk 14, the wireless module 12, the sensor 16 and the power supply 18 respectively and responds to a command for clearing data from the wireless module 12 or the sensor 16 to clear the data in the hard disk 14.

The wireless module 12 is configured to receive the command for clearing data in the wireless network.

The sensor 16 is configured to sense that the laptop is disassembled, and then generate the command for clearing data.

Preferably, the hard disk 14 is an SSD or a mechanical hard disk.

Preferably, the wireless module 12 is a communication module which applies communication technologies of GSM, CDMA, WiFi or 3G.

Preferably, the control chip 10 further comprises a password matching module 100. Before the command for clearing data is received via the wireless module 12, the password matching module 100 controls the laptop to output a prompt of matching passwords, and determines whether received passwords are matched correctly; if the received passwords are matched correctly, the password matching module 100 controls the laptop to log in the system; otherwise, the password matching module 100 controls the wireless module 12 to send the command for clearing data.

Preferably, the control chip 10 further comprises a power supply control module 102. After a power-on signal is received and before the password matching module 100 outputs the prompt for matching passwords, the power supply control module 102 sends a power-on request (i.e, a request of whether to perform power-on) through the wireless module 12; and then the power supply control module 102 determines whether a power-on command is received within a predetermined time period; if the power-on command is received within a predetermined time period, then the power supply control module 102 executes the power-on command and starts the laptop; otherwise, the power supply control module 102 turns off the power supply. The power-on command here can be a power-on command returned by the user terminal to the computer after receiving the power-on request of the computer and acknowledging the power-on.

In the embodiment above, the computer is powered on and started only upon obtaining a starting authorization of a user, so as to improve confidentiality of computer data; and the data can be cleared or be not cleared according to whether it is successful to match a password, or the data can be cleared after obtaining a user command if it is unsuccessful to match the password. Therefore, the confidentiality of user data is improved, and the user data is kept confidential and is prevented from being leaked.

Obviously, those skilled in the art should understand that the modules or steps of the disclosure may be implemented by general computing devices and centralized in a single computing device or distributed in a network consisting of multiple computing devices. Optionally, the modules or steps may be implemented by program codes executable by the computing devices, so that they may be stored in a storage device and executed by the computing device, or respectively made into integrated circuit modules or a single integrated circuit module. By doing so, the disclosure is not limited to any specific combination of hardware and software.

The above are only preferred embodiments of the disclosure and should not be used to limit the disclosure. For those skilled in the art, the disclosure may have various modifications and changes. Any modifications, equivalent replacements, improvements and the like within the spirit and principle of the disclosure shall fall within the scope of protection of the disclosure.

## Claims

1. A method for clearing computer data, **characterized by** comprising:
a computer receiving a command for clearing data through a wireless network, or sensing that the computer is disassembled and then generating the command for clearing data;
the computer clearing data in a memory of the computer.

2. The method according to claim 1, **characterized in that** before the computer receives the command for clearing data through the wireless network, the method further comprises:
the computer outputting a prompt of matching a password, and determining whether a received password is matched correctly;
logging in a system if the received password is matched correctly; if the received password is not matched correctly, sending a request for clearing data through the wireless network to a user terminal; the user terminal sending the command for clearing data to the computer after acknowledging the request for clearing data.

3. The method according to claim 2, **characterized in that** before the computer outputs the prompt of matching a password, the method further comprises:
the computer receiving a power-on signal and sending a request of whether to perform power-on through the wireless network;
the computer determining whether a power-on command is received within a predetermined time period, and executing the power-on command and starting the computer if the computer receives the power-on command within the predetermined time period; turning off a power supply if the computer fails to receive the power-on command within the predetermined time period.

4. The method according to claim 1, **characterized in that** the memory is a solid state disk or a mechanical hard disk.

5. The method according to claim 1, **characterized in that** the computer receives the command for clearing data through a short message or a mail.

6. A computer, comprising: a memory and a wireless module, **characterized by** further comprising: a control chip, a sensor, and a power supply, wherein
the control chip is connected to the memory, the wireless module, the sensor, and the power supply respectively, and responds to a command for clearing data from the wireless module or the sensor to clear data in the memory;
the wireless module is configured to receive the command for clearing data from a wireless network;
the sensor is configured to sense that the computer is disassembled and then generate the command for clearing data;
the memory, the wireless module, the control chip, the sensor and the power supply are packaged in the computer.

7. The computer according to claim 6, **characterized in that** the memory is a solid state disk or a mechanical hard disk.

8. The computer according to claim 6, **characterized in that** the wireless module is a communication module which applies Global System for Mobile Communications (GSM), Code Division Multiple Access (CDMA), Wireless Fidelity (WiFi) or 3rd Generation (3G) communication technology.

9. The computer according to claim 6, **characterized in that** the control chip further comprises:
a password matching module configured to, before the wireless module receives the command for clearing data, control the computer to output a prompt of matching a password, and according to the result of matching the password, control the computer to log in a system or control the wireless module to send a request for clearing data to a user terminal, wherein the user terminal, after acknowledging the request for clear data, sends the command for clearing data to the computer.

10. The computer according to claim 9, **characterized in that** the control chip further comprises:
a power supply control module configured to, after the computer receives a power-on signal and before the password matching module outputs the prompt for matching a password, send a request of whether to perform power-on through the wireless module; and choose to execute the power-on command or turn off the power supply within a predetermined time period according to a received power-on command.

11. The computer according to claim 10, **characterized in that** the computer is a desktop computer or a laptop.
